(19) Europäisches Patentamt
European Patent Office
Office européen des brevets

(11) EP 3 760 663 A1

# (12) EUROPÄISCHE PATENTANMELDUNG

(43) Veröffentlichungstag:
**06.01.2021 Patentblatt 2021/01**

(51) Int Cl.:
***C08G 64/34*** (2006.01) ***C08G 64/18*** (2006.01)

(21) Anmeldenummer: **19184775.5**

(22) Anmeldetag: **05.07.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder:
- **Mueller, Thomas Ernst**
  **44797 Bochum (DE)**
- **Guertler, Christoph**
  **50735 Köln (DE)**
- **Subhani, Muhammad Afzal**
  **52066 Aachen (DE)**
- **Leitner, Walter**
  **52074 Aachen (DE)**

(74) Vertreter: **Levpat**
**c/o Covestro AG**
**Gebäude 4825**
**51365 Leverkusen (DE)**

## (54) VERFAHREN ZUR HERSTELLUNG VON POLYETHERESTERCARBONATPOLYOLEN

(57) Gegenstand der Erfindung ist ein Verfahren zur Herstellung von Polyetherestercarbonatpolyolen durch katalytische Anlagerung von Alkylenoxid und Kohlendioxid an eine H-funktionelle Startersubstanz in Gegenwart eines Doppelmetallcyanid-Katalysators, enthaltend die Schritte:
(α) Vorlegen einer Teilmenge H-funktioneller Startersubstanz und/oder eines Suspensionsmittels, das keine H-funktionelle Gruppen aufweist, in einen Reaktor gegebenenfalls gemeinsam mit DMC-Katalysator,
(γ) Zudosierung von Alkylenoxid und gegebenenfalls Kohlendioxid während der Reaktion in den Reaktor,
dadurch gekennzeichnet, dass in Schritt (γ) Lactid in den Reaktor zudosiert wird.

EP 3 760 663 A1

**Beschreibung**

Die vorliegende Erfindung betrifft ein Verfahren zur Herstellung von Polyetherestercarbonatpolyolen durch Anlagerung von Alkylenoxid, Lactid und Kohlendioxid an eine H-funktionelle Startersubstanz in Gegenwart eines Doppelmetallcyanid-Katalysators. Die Erfindung betrifft ferner ein Polyetherestercarbonatpolyol, welches nach diesem Verfahren erhältlich ist.

Die Herstellung von Polyethercarbonatpolyolen durch katalytische Umsetzung von Alkylenoxiden (Epoxiden) und Kohlendioxid in Anwesenheit von H-funktionellen Startersubstanzen ("Starter") wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkylaryl oder Aryl steht, der jeweils auch Heteroatome wie beispielsweise O, S, Si usw. enthalten kann, und wobei e, f und g für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Schema (I) gezeigte cyclische Carbonat (beispielsweise für R = $CH_3$ Propylencarbonat).

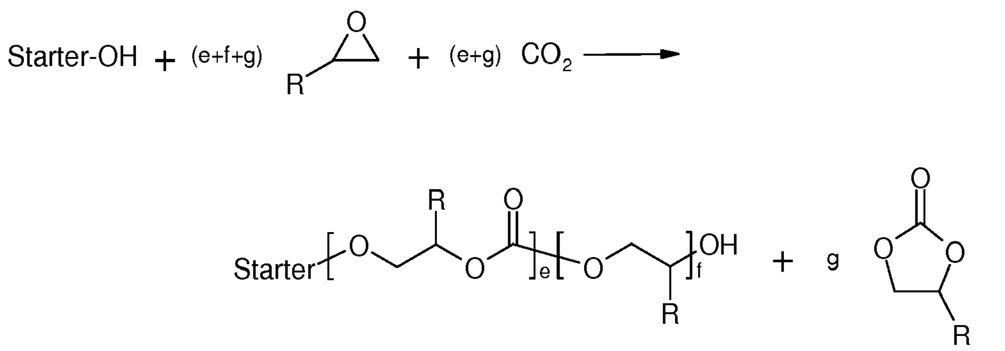

(I)

WO 2013/087582 A2 offenbart die Terpolymerisation von Propylenoxid, Anhydriden und Kohlendioxid in Gegenwart eines Doppelmetallcyanid-Katalysators wobei eine oder mehrere H-funktionelle Startersubstanzen im Reaktor vorgelegt werden. Es werden weder Lactide noch die Viskosität der erhaltenen Polyetherestercarbonatpolyole offenbart.

EP 2 604 642 A1 hat ein Verfahren zur Herstellung von Polyethercarbonatpolyolen durch katalytische Anlagerung von Kohlendioxid und Alkylenoxiden an eine oder mehreren H-funktionellen Startersubstanzen in Gegenwart von Doppelmetallcyanid (DMC)-Katalysator zum Gegenstand, wobei in einem ersten Aktivierungsstufe der DMC-Katalysator und mindestens eine H-funktionelle Startersubstanz vorgelegt werden und in einer zweiten Aktivierungsstufe durch Zugabe von mindestens einem Alkylenoxid, $CO_2$ und mindestens einem cyclischen Anhydrid der DMC-Katalysator aktiviert wird, und in einem dritten Schritt [Polymerisationsstufe] mindestens ein Alkylenoxid und $CO_2$ zugegeben werden. Es werden weder Lactide noch die Viskosität der erhaltenen Polyetherestercarbonatpolyole offenbart.

WO 2014/033070 A1 offenbart ein Verfahren zur Herstellung von Polyethercarbonatpolyolen durch Anlagerung von Alkylenoxiden und Kohlendioxid an eine oder mehrere H-funktionelle Startersubstanzen in Gegenwart eines Doppelmetallcyanid-Katalysators, wobei ein Suspensionsmittel, das keine H-funktionellen Gruppen enthält und ausgewählt ist aus einer oder mehreren Verbindungen aus der Gruppe bestehend aus aliphatischen Lactonen, aromatischen Lactonen, Lactiden, cyclischen Carbonaten mit mindestens drei gegebenenfalls substituierten Methylengruppen zwischen den Sauerstoffatomen der Carbonatgruppe, aliphatischen cyclischen Anhydriden und aromatischen cyclischen Anhydriden, in einem Reaktor vorgelegt wird und eine oder mehrere H-funktionelle Startersubstanzen während der Reaktion kontinuierlich in den Reaktor zudosiert werden. Es wird weder ein Effekt von Lactiden auf die Viskosität des Polyethercarbonatpolyols offenbart noch die Zudosierung von Lactiden während der Copolymerisation.

Es war die Aufgabe der vorliegenden Erfindung, ein Verfahren zur Herstellung von Polyetherestercarbonatpolyolen zur Verfügung zu stellen, bei dem das resultierende Polyetherestercarbonatpolyol eine niedrige Viskosität aufweist.

Die Aufgabe wurde gelöst durch ein Verfahren zur Herstellung von Polyetherestercarbonatpolyolen durch katalytische Anlagerung von Alkylenoxid und Kohlendioxid an eine H-funktionelle Startersubstanz in Gegenwart eines Doppelmetallcyanid-Katalysators, enthaltend die Schritte:

(α) Vorlegen einer Teilmenge H-funktioneller Startersubstanz und/oder eines Suspensionsmittels, das keine H-funktionelle Gruppen aufweist, in einen Reaktor gegebenenfalls gemeinsam mit DMC-Katalysator,
(γ) Zudosierung von Alkylenoxid und gegebenenfalls Kohlendioxid während der Reaktion in den Reaktor,

dadurch gekennzeichnet, dass in Schritt (γ) Lactid in den Reaktor zudosiert wird

Zu Schritt (α):

Bei dem Verfahren kann zunächst eine Teilmenge H-funktioneller Startersubstanz und/oder ein Suspensionsmittel, das keine H-funktionelle Gruppen aufweist, im Reaktor vorgelegt werden.
Anschließend wird gegebenenfalls die für die Polyaddition benötigte Menge an DMC-Katalysator in den Reaktor gegeben. Die Reihenfolge der Zugabe ist dabei nicht entscheidend. Es kann auch erst der DMC-Katalysator und anschließend eine Teilmenge H-funktioneller Startersubstanz in den Reaktor gefüllt werden. Alternativ kann auch erst der DMC-Katalysator in einer Teilmenge H-funktioneller Startersubstanz suspendiert und anschließend die Suspension in den Reaktor gefüllt werden.
In einer bevorzugten Ausführungsform der Erfindung wird in Schritt (α) eine H-funktionelle Startersubstanz im Reaktor gegebenenfalls gemeinsam mit DMC-Katalysator vorgelegt, und dabei wird kein Suspensionsmittel, das keine H-funktionelle Gruppen enthält, im Reaktor vorgelegt.
Der DMC-Katalysator wird vorzugsweise in einer Menge eingesetzt, so dass der Gehalt an Katalysator im resultierenden Reaktionsprodukt 10 bis 10000 ppm, besonders bevorzugt 20 bis 5000 ppm und höchst bevorzugt 50 bis 500 ppm beträgt
In einer bevorzugten Ausführungsform wird in das resultierende Gemisch aus (a) einer Teilmenge H-funktioneller Startersubstanz und (b) DMC-Katalysator bei einer Temperatur von 90 bis 150°C, besonders bevorzugt von 100 bis 140°C Inertgas (beispielsweise Argon oder Stickstoff), ein Inertgas-Kohlendioxid-Gemisch oder Kohlendioxid eingeleitet und gleichzeitig ein reduzierter Druck (absolut) von 10 mbar bis 800 mbar, besonders bevorzugt von 50 mbar bis 200 mbar angelegt.
In einer alternativen bevorzugten Ausführungsform wird das resultierende Gemisch aus (a) einer Teilmenge H-funktioneller Startersubstanz und (b) DMC-Katalysator bei einer Temperatur von 90 bis 150°C, besonders bevorzugt von 100 bis 140°C mindestens einmal, vorzugsweise dreimal mit 1,5 bar bis 10 bar (absolut), besonders bevorzugt 3 bar bis 6 bar (absolut) eines Inertgases (beispielsweise Argon oder Stickstoff), eines Inertgas-Kohlendioxid-Gemisches oder Kohlendioxid beaufschlagt und jeweils anschließend der Überdruck auf ca. 1 bar (absolut) reduziert.
Der DMC-Katalysator kann in fester Form oder als Suspension in Suspensionsmittel, das keine H-funktionelle Gruppen enthält, in H-funktioneller Startersubstanz oder in einer Mischung aus den genannten zugegeben werden.
In einer weiteren bevorzugten Ausführungsform wird in Schritt (α)

(α-I) eine Teilmenge der H-funktionellen Startersubstanzen und/oder Suspensionsmittel vorgelegt und
(α-II) die Temperatur der Teilmenge H-funktioneller Startersubstanz auf 50 bis 200°C, bevorzugt 80 bis 160°C, besonders bevorzugt 100 bis 140°C gebracht und/oder der Druck im Reaktor auf weniger als 500 mbar, bevorzugt 5 mbar bis 100 mbar erniedrigt, wobei gegebenenfalls ein Inertgas-Strom (beispielsweise von Argon oder Stickstoff), ein Inertgas-Kohlendioxid-Strom oder ein Kohlendioxid-Strom durch den Reaktor geleitet wird,

wobei der DMC-Katalysator zur Teilmenge H-funktioneller Startersubstanz in Schritt (α-I) oder unmittelbar anschließend in Schritt (α-II) zugesetzt wird.
Die in (α) eingesetzte Teilmenge der H-funktionellen Startersubstanz kann eine Komponente K enthalten, bevorzugt in einer Menge von mindestens 50 ppm, besonders bevorzugt von 100 bis 10000 ppm.
In einer bevorzugten Ausführungsform wird der Schritt (α) in Abwesenheit von Lactid durchgeführt.

Zu Schritt (β):

Schritt (β) dient der Aktivierung des DMC-Katalysators. Dieser Schritt kann gegebenenfalls unter Inertgasatmosphäre, unter einer Atmosphäre aus einem Inertgas-Kohlendioxid-Gemisch oder unter einer Kohlendioxid-Atmosphäre durchgeführt werden. Als Aktivierung im Sinne dieser Erfindung wird ein Schritt bezeichnet, bei dem eine Teilmenge Alkylenoxid bei Temperaturen von 90 bis 150°C zur DMC-Katalysator-Suspension zugegeben wird und dann die Zugabe des Alkylenoxids unterbrochen wird, wobei aufgrund einer folgenden exothermen chemischen Reaktion eine Wärmeentwicklung, die zu einer Temperaturspitze ("Hotspot") führen kann, sowie aufgrund der Umsetzung von Alkylenoxid und gegebenenfalls $CO_2$ ein Druckabfall im Reaktor beobachtet wird.
Der Verfahrensschritt der Aktivierung ist die Zeitspanne von der Zugabe der Teilmenge an Alkylenoxid, gegebenenfalls in Gegenwart von $CO_2$, zum DMC-Katalysator bis zum Auftreten der Wärmeentwicklung. Gegebenenfalls kann die Teilmenge des Alkylenoxids in mehreren Einzelschritten, gegebenenfalls in Gegenwart von $CO_2$, zum DMC-

Katalysator gegeben werden und dann jeweils die Zugabe des Alkylenoxids unterbrochen werden. In diesem Fall umfasst der Verfahrensschritt der Aktivierung die Zeitspanne von der Zugabe der ersten Teilmenge an Alkylenoxid, gegebenenfalls in Gegenwart von $CO_2$, zum DMC-Katalysator bis zum Auftreten der Wärmeentwicklung nach Zugabe der letzten Teilmenge an Alkylenoxid. Im Allgemeinen kann dem Aktivierungsschritt ein Schritt zum Trocknen des DMC-Katalysators und ggf. der H-funktionellen Startersubstanz bei erhöhter Temperatur und/oder reduziertem Druck, gegebenenfalls unter Durchleiten eines Inertgases durch die Reaktionsmischung, vorgelagert sein.

Die Dosierung des Alkylenoxids (und gegebenenfalls des Kohlendioxids) kann prinzipiell in unterschiedlicher Weise erfolgen. Der Start der Dosierung kann aus dem Vakuum heraus oder bei einem zuvor gewählten Vordruck erfolgen. Der Vordruck wird bevorzugt durch Einleiten eines Inertgases (wie beispielsweise Stickstoff oder Argon) oder von Kohlendioxid eingestellt, wobei der Druck(absolut) 5 mbar bis 100 bar, vorzugsweise 10 mbar bis 50 bar und bevorzugt 20 mbar bis 50 bar beträgt.

In einer bevorzugten Ausführungsform beträgt die bei der Aktivierung in Schritt (β) eingesetzte Menge des Alkylenoxids 0,1 bis 25,0 Gew.-%, bevorzugt 1,0 bis 20,0 Gew.-%, besonders bevorzugt 2,0 bis 16,0 Gew.-% (bezogen auf die im Schritt (α) eingesetzte Menge an H-funktioneller Startersubstanz). Das Alkylenoxid kann in einem Schritt oder portionsweise in mehreren Teilmengen zugegeben werden. Bevorzugt wird nach Zugabe einer Teilmenge des Alkylenoxids die Zugabe des Alkylenoxids bis zum Auftreten der Wärmeentwicklung unterbrochen und erst dann die nächste Teilmenge an Alkylenoxid zugegeben. Bevorzugt ist auch eine zweistufige Aktivierung (Schritt β), wobei

(β1) in einer ersten Aktivierungsstufe die Zugabe einer ersten Teilmenge von Alkylenoxid unter Inertgasatmosphäre oder Kohlendioxid-Atmosphäre erfolgt und
(β2) in einer zweiten Aktivierungsstufe die Zugabe einer zweiten Teilmenge von Alkylenoxid unter Kohlendioxid-Atmosphäre erfolgt.

Zu Schritt (γ):

Die Dosierung H-funktioneller Startersubstanz, Alkylenoxids, Lactids und gegebenenfalls des Kohlendioxids kann simultan oder sequentiell (portionsweise) erfolgen. Vorzugsweise erfolgt die Dosierung H-funktioneller Startersubstanz während der Reaktion in den Reaktor kontinuierlich und Alkylenoxid, Lactid und gegebenenfalls Kohlendioxid werden während der Reaktion in den Reaktor simultan oder sequentiell (portionsweise) hinzudosiert. Besonders bevorzugt erfolgt die Dosierung H-funktioneller Startersubstanz, Alkylenoxids, Lactids und Kohlendioxids während der Reaktion in den Reaktor simultan und kontinuierlich. Beispielsweise kann die gesamte Kohlendioxidmenge, die Menge an H-funktioneller Startersubstanz und/oder die in Schritt (γ) dosierte Menge an Alkylenoxid und Lactid auf einmal oder kontinuierlich zugegeben werden. Der hier verwendete Begriff "kontinuierlich" kann als Modus der Zugabe eines Reaktanden so definiert werden, dass eine für die Copolymerisation wirksame Konzentration des Reaktanden aufrechterhalten wird, d.h. die Dosierung kann beispielsweise mit einer konstanten Dosierrate, mit einer variierenden Dosierrate oder portionsweise erfolgen.

Unter dem Begriff "Copolymerisation" wird im Rahmen der vorliegenden Erfindung die Polymerisation von wenigstens zwei unterschiedlichen monomeren Verbindungen verstanden, das heißt, auch die Polymerisation von drei unterschiedlichen Monomeren, die allenthalben als "Terpolymerisation" bezeichnet wird, oder auch die Polymerisation von vier oder mehr unterschiedlichen Monomeren umfasst.

Es ist möglich, während der Zugabe von Alkylenoxid, Lactid und/oder H-funktioneller Startersubstanz den $CO_2$-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung von Alkylenoxid und/oder H-funktioneller Startersubstanz erfolgt simultan oder sequentiell zur Kohlendioxid-Dosierung.

Es ist möglich, Alkylenoxid und/oder Lactid mit konstanter Dosierrate zu dosieren oder die Dosierrate allmählich oder schrittweise zu steigern oder zu senken oder Alkylenoxid und/oder Lactid portionsweise zuzugeben. Bevorzugt wird Alkylenoxid und/oder Lactid mit konstanter Dosierrate dem Reaktionsgemisch zugegeben. Werden mehrere Alkylenoxide und/oder Lactide zur Synthese der Polyetherestercarbonatpolyole eingesetzt, so können die Alkylenoxide und/oder die Lactide einzeln oder als Gemisch dosiert werden.

Die Zugabe von Alkylenoxid und Lactid erfolgt bevorzugt über separate Dosierstellen. Es kann jedoch auch eine Mischung aus Alkylenoxid und Lactid dosiert werden. Die Dosierung von Alkylenoxid bzw. H-funktioneller Startersubstanz kann simultan oder sequentiell über jeweils separate Dosierungen (Zugaben) erfolgen oder über eine oder mehrere Dosierungen, wobei die Alkylenoxide bzw. die H-funktionellen Startersubstanzen einzeln oder als Gemisch dosiert werden können. Über die Art und/oder Reihenfolge der Dosierung von H-funktioneller Startersubstanz, Alkylenoxid, Lactid und/oder Kohlendioxid ist es möglich, statistische, alternierende, blockartige oder gradientenartige Polyetherestercarbonatpolyole zu synthetisieren.

In einer bevorzugten Ausführungsform wird in Schritt (γ) die Dosierung H-funktioneller Startersubstanz zeitlich vor der Zugabe von Alkylenoxid und/oder Lactid beendet.

Vorzugsweise wird ein Überschuss an Kohlendioxid bezogen auf die berechnete Menge an eingebautem Kohlendioxid im Polyetherestercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Polyetherestercarbonatpolyole als vorteilhaft erwiesen. Es ist möglich, das Kohlendioxid kontinuierlich oder diskontinuierlich zuzuführen. Dies hängt davon ab, wie schnell die Alkylenoxide verbraucht werden und ob das Produkt gegebenenfalls $CO_2$-freie Polyether-Blöcke enthalten soll. Die Menge des Kohlendioxids (angegeben als Druck) kann bei der Zugabe der Alkylenoxide ebenso variieren. $CO_2$ kann auch als Feststoff in den Reaktor gegeben werden und dann unter den gewählten Reaktionsbedingungen in den gasförmigen, gelösten, flüssigen und/oder überkritischen Zustand übergehen.

Eine bevorzugte Ausführungsform des erfindungsgemäßen Verfahrens ist unter anderem dadurch gekennzeichnet, dass in Schritt (γ) die Gesamtmenge H-funktioneller Startersubstanz zugegeben wird. Diese Zugabe kann mit einer konstanten Dosierrate, mit einer variierenden Dosierrate oder portionsweise erfolgen.

Für das erfindungsgemäße Verfahren hat sich weiterhin gezeigt, dass die Copolymerisation (Schritt (γ)) zur Herstellung der Polyetherestercarbonatpolyole vorteilhafterweise bei 50 bis 150°C, bevorzugt bei 60 bis 145°C, besonders bevorzugt bei 70 bis 140°C und ganz besonders bevorzugt bei 90 bis 130°C durchgeführt wird. Werden Temperaturen unterhalb von 50°C eingestellt, wird die Reaktion im Allgemeinen sehr langsam. Bei Temperaturen oberhalb von 150°C steigt die Menge an unerwünschten Nebenprodukten stark an.

Die Dosierung von Alkylenoxid, Lactid, H-funktioneller Startersubstanz und DMC-Katalysators kann über separate oder gemeinsame Dosierstellen erfolgen. In einer bevorzugten Ausführungsform werden Alkylenoxid und H-funktionelle Startersubstanz über separate Dosierstellen kontinuierlich dem Reaktionsgemisch zugeführt. Diese Zugabe H-funktioneller Startersubstanz kann als kontinuierliche Zudosierung in den Reaktor oder portionsweise erfolgen.

Die Schritte (α), (β) und (γ) können in demselben Reaktor oder jeweils separat in unterschiedlichen Reaktoren durchgeführt werden. Besonders bevorzugte Reaktortypen sind: Rohrreaktoren, Rührkessel, Schlaufenreaktoren.

Polyetherestercarbonatpolyole können in einem Rührkessel hergestellt werden, wobei der Rührkessel je nach Ausführungsform und Betriebsweise über den Reaktormantel, innen liegende und/oder in einem Umpumpkreislauf befindliche Kühlflächen gekühlt wird. Sowohl in der semibatch Anwendung, bei der das Produkt erst nach Ende der Reaktion entnommen wird, als auch in der kontinuierlichen Anwendung, bei der das Produkt kontinuierlich entnommen wird, ist besonders auf die Dosiergeschwindigkeit des Alkylenoxids zu achten. Sie ist so einzustellen, dass trotz der inhibierenden Wirkung des Kohlendioxids die Alkylenoxide genügend schnell abreagieren. Die Konzentration an freien Alkylenoxid in der Reaktionsmischung während des Aktivierungsschritts (Schritt β) beträgt vorzugsweise > 0 bis 100 Gew.-%, besonders bevorzugt > 0 bis 50 Gew-%, höchst bevorzugt > 0 bis 20 Gew.-% (jeweils bezogen auf das Gewicht der Reaktionsmischung). Die Konzentration an freien Alkylenoxid in der Reaktionsmischung während der Reaktion (Schritt y) beträgt vorzugsweise > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung).

In einer bevorzugten Ausführungsform wird die gemäß den Schritten (α) und (β) resultierende aktivierte DMC-Katalysator-Suspensionsmittel-Mischung in demselben Reaktor weiter mit Alkylenoxid, H-funktioneller Startersubstanz und Kohlendioxid umgesetzt. In einer weiteren bevorzugten Ausführungsform wird die gemäß den Schritten (α) und (β) resultierende aktivierte DMC-Katalysator-Suspensionsmittel-Mischung in einem anderen Reaktionsbehältnis (beispielsweise einem Rührkessel, Rohrreaktor oder Schlaufenreaktor) weiter mit Alkylenoxid, H-funktioneller Startersubstanz und Kohlendioxid umgesetzt.

Bei Reaktionsführung in einem Rohrreaktor werden die gemäß den Schritten (α) und (β) resultierende aktivierte Katalysator-Suspensionsmittel-Mischung, H-funktionelle Startersubstanz, Alkylenoxid und Kohlendioxid kontinuierlich durch ein Rohr gepumpt. Die molaren Verhältnisse der Reaktionspartner variieren je nach gewünschtem Polymer. In einer bevorzugten Ausführungsform wird hierbei Kohlendioxid in seiner flüssigen oder überkritischen Form zudosiert, um eine optimale Mischbarkeit der Komponenten zu ermöglichen. Vorteilhafterweise werden Mischelemente zur besseren Durchmischung der Reaktionspartner eingebaut, wie sie zum Beispiel von der Firma Ehrfeld Mikrotechnik BTS GmbH vertrieben werden, oder Mischer-Wärmetauscherelemente, die gleichzeitig die Durchmischung und Wärmeabfuhr verbessern.

Schlaufenreaktoren können ebenfalls zur Herstellung von Polyetherestercarbonatpolyolen verwendet werden. Hierunter fallen im Allgemeinen Reaktoren mit Stoffrückführung, wie beispielsweise ein Strahlschlaufenreaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren. Der Einsatz eines Schlaufenreaktors ist insbesondere deshalb von Vorteil, weil hier eine Rückvermischung realisiert werden kann, so dass die Konzentration an freien Alkylenoxid in der Reaktionsmischung im optimalen Bereich, vorzugsweise im Bereich > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung) gehalten werden kann.

Bevorzugt werden die Polyetherestercarbonatpolyole in einem kontinuierlichen Verfahren hergestellt, das sowohl eine kontinuierliche Copolymerisation als auch eine kontinuierliche Zugabe H-funktioneller Startersubstanz umfasst.

Gegenstand der Erfindung ist daher auch ein Verfahren wobei in Schritt (γ) H-funktionelle Startersubstanz, Alkylenoxid, Lactid sowie DMC-Katalysator in Gegenwart von Kohlendioxid ("Copolymerisation") kontinuierlich in den Reaktor dosiert werden und wobei das resultierende Reaktionsgemisch (enthaltend das Reaktionsprodukt) kontinuierlich aus dem Reaktor entfernt wird.

Vorzugsweise wird dabei in Schritt (γ) der DMC-Katalysator in H-funktioneller Startersubstanz suspendiert kontinuierlich zugegeben.

Beispielsweise wird für das kontinuierliche Verfahren zur Herstellung der Polyetherestercarbonatpolyole gemäß den Schritten (α) und (β) eine aktivierte DMC-Katalysator-Suspensionsmittel-Mischung hergestellt, dann werden gemäß Schritt (γ)

(γ1) jeweils eine Teilmenge an H-funktioneller Startersubstanz, Alkylenoxid und Kohlendioxid zum Initiieren der Copolymerisation zudosiert, und

(γ2) während des Fortschreitens der Copolymerisation jeweils die verbleibende Menge an DMC-Katalysator, H-funktioneller Startersubstanz, Alkylenoxid und Lactid in Gegenwart von Kohlendioxid kontinuierlich zudosiert, wobei gleichzeitig resultierendes Reaktionsgemisch kontinuierlich aus dem Reaktor entfernt wird.

In Schritt (γ) wird der DMC-Katalysator bevorzugt suspendiert in H-funktioneller Startersubstanz zugegeben, wobei die Menge vorzugsweise so gewählt ist, dass der Gehalt an DMC-Katalysator im resultierenden Reaktionsprodukt 10 bis 10000 ppm, besonders bevorzugt 20 bis 5000 ppm und höchst bevorzugt 50 bis 500 ppm beträgt.

Vorzugsweise werden die Schritte (α) und (β) in einem ersten Reaktor durchgeführt, und das resultierende Reaktionsgemisch dann in einen zweiten Reaktor für die Copolymerisation gemäß Schritt (γ) überführt. Es ist aber auch möglich, die Schritte (α), (β) und (γ) in einem Reaktor durchzuführen.

Es ist auch gefunden worden, dass das Verfahren der vorliegenden Erfindung zur Herstellung großer Mengen des Polyetherestercarbonatpolyols verwendet werden kann, wobei anfänglich ein gemäß den Schritten (α) und (β) in einem Suspensionsmittel aktivierter DMC-Katalysator verwendet wird, und während der Copolymerisation (γ) der DMC-Katalysator ohne vorherige Aktivierung zugesetzt wird.

Ein besonders vorteilhaftes Merkmal der bevorzugten Ausführungsform der vorliegenden Erfindung ist also die Fähigkeit zur Verwendung von "frischen" DMC-Katalysatoren ohne Aktivierung für die Teilmenge an DMC-Katalysator, die kontinuierlich im Schritt (γ) zugegeben wird. Eine analog zu Schritt (β) durchzuführende Aktivierung von DMC-Katalysatoren umfasst nicht nur zusätzliche Aufmerksamkeit der Bedienungsperson, wodurch sich die Fertigungskosten erhöhen, sondern sie erfordert auch einen Druck-Reaktionsbehälter, wodurch sich auch die Kapitalkosten beim Bau einer entsprechenden Produktionsanlage erhöhen. Hier wird "frischer" Katalysator als nicht aktivierter DMC-Katalysator in fester Form oder in Form einer Aufschlämmung in einem Suspensionsmittel oder einer H-funktionellen Startersubstanz definiert. Die Fähigkeit des vorliegenden Verfahrens zur Verwendung von frischem, nicht aktivierten DMC-Katalysator im Schritt (γ) ermöglicht signifikante Einsparungen bei der kommerziellen Herstellung von Polyetherestercarbonatpolyolen und ist eine bevorzugte Ausführungsform der vorliegenden Erfindung.

Der hier verwendete Begriff "kontinuierlich" kann als Modus der Zugabe eines relevanten Katalysators oder Reaktanden so definiert werden, dass eine wirksame Konzentration des DMC-Katalysators oder des Reaktanden im Wesentlichen kontinuierlich aufrechterhalten wird. Die Katalysatorzufuhr kann echt kontinuierlich oder in relativ eng beabstandeten Inkrementen erfolgen. Gleichermaßen kann eine kontinuierliche Starterzugabe echt kontinuierlich sein oder in Inkrementen erfolgen. Es würde nicht vom vorliegenden Verfahren abweichen, einen DMC-Katalysator oder Reaktanden inkrementell so zuzugeben, dass die Konzentration der zugegebenen Materialien für einige Zeit vor der nächsten inkrementellen Zugabe im Wesentlichen auf null abfällt. Es ist jedoch bevorzugt, dass die DMC-Katalysatorkonzentration während des Hauptteils des Verlaufs der kontinuierlichen Reaktion im Wesentlichen auf derselben Konzentration gehalten wird und dass Startersubstanz während des Hauptteils des Copolymerisations-Verfahrens vorhanden ist. Eine inkrementelle Zugabe von DMC-Katalysator und/oder Reaktant, die die Beschaffenheit des Produkts nicht wesentlich beeinflusst, ist in demjenigen Sinn, in dem der Begriff hier verwendet wird, dennoch "kontinuierlich". Es ist beispielsweise machbar, eine Rückführungsschleife bereitzustellen, in der ein Teil der reagierenden Mischung zu einem vorherigen Punkt im Verfahren zurückgeführt wird, wodurch durch inkrementelle Zugaben bewirkte Diskontinuitäten geglättet werden.

Schritt (δ)

Optional kann in einem Schritt (δ) das in Schritt (γ) kontinuierlich entfernte Reaktionsgemisch, welches im Allgemeinen einen Gehalt von 0,05 Gew.-% bis 10 Gew.-% Alkylenoxid enthält, in einen Nachreaktor überführt werden, in dem im Wege einer Nachreaktion der Gehalt an freiem Alkylenoxid auf weniger als 0,05 Gew.-% im Reaktionsgemisch reduziert wird. Als Nachreaktor kann beispielsweise ein Rohrreaktor, ein Schlaufenreaktor oder ein Rührkessel dienen.

Bevorzugt liegt der Druck in diesem Nachreaktor bei demselben Druck wie in dem Reaktionsapparat, in dem der Reaktionsschritt (γ) durchgeführt wird. Der Druck in dem nachgeschalteten Reaktor kann jedoch auch höher oder niedriger gewählt werden. In einer weiteren bevorzugten Ausführungsform wird das Kohlendioxid nach dem Reaktionsschritt (γ) ganz oder teilweise abgelassen und der nachgeschaltete Reaktor bei Normaldruck oder einem geringen Überdruck betrieben. Die Temperatur in dem nachgeschalteten Reaktor liegt bevorzugt bei 50 bis 150°C und besonders bevorzugt bei 80 bis 140°C.

Als **Suspensionsmittel,** die keine H-funktionelle Gruppen aufweisen, sind alle polar-aprotischen, schwach polar-aprotischen und unpolar-aprotischen Lösungsmittel geeignet, die jeweils keine H-funktionellen Gruppen enthalten. Als Suspensionsmittel können auch eine Mischung aus zwei oder mehrerer dieser Suspensionsmittel eingesetzt werden. Beispielhaft seien an dieser Stelle folgende polar-aprotischen Lösungsmittel genannt: 4-Methyl-2-oxo-1,3-dioxolan (im Folgenden auch als cyclisches Propylencarbonat oder cPC bezeichnet), 1,3-Dioxolan-2-on (im Folgenden auch als cyclisches Ethylencarbonat oder cEC bezeichnet), Aceton, Methylethylketon, Acetonitril, Nitromethan, Dimethylsulfoxid, Sulfolan, Dimethylformamid, Dimethylacetamid und N-Methylpyrrolidon. Zu der Gruppe der unpolar- und schwach polar-aprotischen Lösungsmittel zählen z.B. Ether, wie z.B. Dioxan, Diethylether, Methyl-tert-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlenwasserstoffe, wie z.B., Chloroform, Chlorbenzol, Dichlorbenzol und Tetrachlorkohlenstoff. Bevorzugt als Suspensionsmittel werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3-Dioxolan-2-on oder eine Mischung aus 4-Methyl-2-oxo-1,3-dioxolan und 1,3-Dioxolan-2-on.

**Lactid** im Sinne der Erfindung sind cyclische Verbindungen enthaltend zwei oder mehr Esterbindungen im Ring, vorzugsweise Verbindungen der Formel (II),

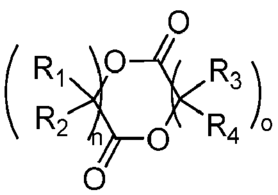

(II)

wobei R1, R2, R3 und R4 unabhängig voneinander für Wasserstoff, einen linearen oder verzweigen gegebenenfalls Heteroatome enthaltenden C1 bis C22 Alkylrest, einen linearen oder verzweigen, ein- oder mehrfach ungesättigten, gegebenenfalls Heteroatome enthaltenden C1 bis C22 Alkenylrest oder einen gegebenenfalls einfach oder mehrfach substituierten, gegebenenfalls Heteroatome enthaltenden C6 bis C18 Arylrest stehen oder Glieder eines gesättigten oder ungesättigten 4 bis 7 gliedrigen gegebenenfalls Heteroatome und/oder Ethergruppen enthaltenen Rings oder polycyclischen Systems sein können,

und n und o unabhängig voneinander eine ganze Zahl größer gleich 1, bevorzugt 1, 2, 3 oder 4 ist, und R1 und R2 in Wiederholungseinheiten (n>1) und R3 und R4 in Wiederholungseinheiten (o > 1) jeweils unterschiedlich sein können.

Bevorzugte Verbindungen der Formel (II) sind 1,4-Dioxan-2,5-dion, (S,S)-3,6-Dimethyl-1,4-dioxan-2,5-dion, (R,R)-3,6-Dimethyl-1,4-dioxan-2,5-dion, Meso-3,6-Dimethyl-1,4-dioxan-2,5-dion und 3-Methyl-1,4-dioxan-2,5-dion, 3-Hexyl-6-methyl-1,4-dioxane-2,5-dione, 3,6-Di(but-3-en-1-yl)-1,4-dioxane-2,5-dion (jeweils einschließlich optisch aktiver Formen). Besonders bevorzugt ist (S,S)-3,6-Dimethyl-1,4-dioxan-2,5-dion.

Das Lactid wird in dem erfindungsgemäßen Verfahren bevorzugt in einer Menge von 5 bis 40 Gew.-%, besonders bevorzugt 5 bis 30 Gew.-%, insbesondere bevorzugt 10 bis 30 Gew.-%, jeweils bezogen auf die Gesamtmenge am eingesetzten Alkylenoxid, eingesetzt.

Als **Alkylenoxid** können für das erfindungsgemäße Verfahren Allgemein Alkylenoxide mit 2-24 Kohlenstoffatomen eingesetzt werden. Bei den Alkylenoxiden mit 2-24 Kohlenstoffatomen handelt es sich beispielsweise um Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyoxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxypropyl-ethyldiethoxysilan, 3-Glycidyloxypropyltriisopropoxysilan. Bevorzugt werden als Alkylenoxid Ethylenoxid und/oder Propylenoxid, besonders bevorzugt Propylenoxid eingesetzt.

Als geeignete **H-funktionelle Startersubstanz** ("Starter") können Verbindungen mit für die Alkoxylierung aktiven H-Atomen eingesetzt werden, die eine Molmasse von 18 bis 4500 g/mol, bevorzugt von 62 bis 500 g/mol und besonders bevorzugt von 62 bis 182 g/mol aufweisen. Die Fähigkeit zur Verwendung eines Starters mit einer niedrigen Molmasse ist ein deutlicher Vorteil gegenüber der Verwendung von oligomeren Startern, die mittels einer vorherigen Oxyalkylierung hergestellt sind. Insbesondere wird eine Wirtschaftlichkeit erreicht, die durch das Weglassen eines getrennten Oxyalkylierungsverfahrens ermöglicht wird.

Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$, besonders bevorzugt ist -OH. Als H-funktionelle Startersubstanz wird beispielsweise eine oder mehrere Verbindungen ausgewählt aus der Gruppe bestehend aus ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine, Polytetrahydrofurane (z. B. PolyTHF® der BASF), Polytetrahydrofuranamine, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel mindestens 2 OH-Gruppen pro Molekül enthalten, eingesetzt. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Startersubstanzen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-l-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielsweise Trimethylolpropan, Glycerin, Trishydroxyethylisocyanurat, Rizinusöl); vierwertige Alkohole (wie beispielsweise Pentaerythrit); Polyalkohole (wie beispielsweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an $\varepsilon$-Caprolacton.

Die H-funktionellen Startersubstanzen können auch aus der Substanzklasse der Polyetherpolyole ausgewählt sein, die ein Molekulargewicht $M_n$ im Bereich von 18 bis 4500 g/mol und eine Funktionalität von 2 bis 3 aufweisen. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln.

Die H-funktionellen Startersubstanzen können auch aus der Substanzklasse der Polyesterpolyole ausgewählt sein. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole, die ebenfalls als Startersubstanzen zur Herstellung der Polyetherestercarbonatpolyole dienen können.

Des Weiteren können als H-funktionelle Startersubstanzen Polycarbonatdiole eingesetzt werden, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177.

In einer weiteren Ausführungsform der Erfindung können Polyetherestercarbonatpolyole als H-funktionelle Startersubstanzen eingesetzt werden. Insbesondere werden Polyetherestercarbonatpolyole, die nach dem hier beschriebenen erfindungsgemäßen Verfahren erhältlich sind, eingesetzt. Diese als H-funktionelle Startersubstanzen eingesetzten Polyetherestercarbonatpolyole werden hierzu in einem separaten Reaktionsschritt zuvor hergestellt.

Die H-funktionellen Startersubstanzen weisen im Allgemeinen eine Funktionalität (d.h. Anzahl an für die Polymerisation aktiven H-Atomen pro Molekül) von 1 bis 8, bevorzugt von 2 oder 3 auf. Die H-funktionellen Startersubstanzen werden entweder einzeln oder als Gemisch aus mindestens zwei H-funktionellen Startersubstanzen eingesetzt.

Besonders bevorzugt handelt es sich bei den H-funktionellen Startersubstanzen um eine oder mehrere Verbindungen ausgewählt aus der Gruppe bestehend aus Ethylenglykol, 1,2-Propandiol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol und Polyetherpolyole mit einem Molekulargewicht Mn im Bereich von 150 bis 4500 g/mol und einer Funktionalität von 2 bis 3.

Die Herstellung der Polyetherestercarbonatpolyole erfolgt durch katalytische Anlagerung von Kohlendioxid, Lactid und Alkylenoxid an H-funktionelle Startersubstanz. Unter "H-funktionell" wird im Sinne der Erfindung die Anzahl an für die Alkoxylierung aktiven H-Atomen pro Molekül der Startersubstanz verstanden.

DMC-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyetherestercarbonatpolyolen bei sehr geringen Katalysatorkonzentrationen, so dass eine Abtrennung des Katalysators aus dem fertigen Produkt i.a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

Die erfindungsgemäßen DMC-Katalysatoren werden vorzugsweise erhalten, indem man

(i) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,

(ii) wobei im zweiten Schritt der Feststoff aus der aus (i) erhaltenen Suspension durch bekannte Techniken (wie Zentrifugation oder Filtration) abgetrennt wird,

(iii) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),

(iv) wobei anschließend der erhaltene Feststoff, gegebenenfalls nach Pulverisierung, bei Temperaturen von im Allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den erfindungsgemäßen DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise werden eine wässrige Lösung von Zinkchlorid (bevorzugt im Überschuss bezogen auf das Metallcyanidsalz wie beispielsweise Kaliumhexacyanocobaltat) und Kaliumhexacyanocobaltat gemischt und anschließend Dimethoxyethan (Glyme) oder tert-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze besitzen bevorzugt die allgemeine Formel (III),

$$M(X)_n \qquad \text{(III)}$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,

X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (IV),

$$M_r(X)_3 \qquad (IV)$$

wobei

M ausgewählt ist aus den Metallkationen $Fe^{3+}$, $Al^{3+}$, $Co^{3+}$ und $Cr^{3+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalat ist und
r ist 1, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (V),

$$M(X)_s \qquad (V)$$

wobei

M ausgewählt ist aus den Metallkationen $Mo^{4+}$, $V^{4+}$ und $W^{4+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (VI),

$$M(X)_t \qquad (VI)$$

wobei

M ausgewählt ist aus den Metallkationen $Mo^{6+}$ und $W^{6+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Carboxylat, Cyanat, Thiocyanat, Isocyanat, Isothiocyanat oder Nitrat ist,

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze besitzen bevorzugt die allgemeine Formel (VII)

$$(Y)_aM'(CN)_b(A)_c \qquad (VII)$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),

Y ausgewählt ist aus einem oder mehreren Metallkationen der Gruppe bestehend aus Alkalimetall (d.h. $Li^+$, $Na^+$, $K^+$, $Rb^+$) und Erdalkalimetall (d.h. $Be^{2+}$, $Mg^{2+}$, $Ca^{2+}$, $Sr^{2+}$, $Ba^{2+}$),

A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und

a, b und c ganzzahlige Zahlen sind, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Bevorzugte Doppelmetallcyanid-Verbindungen, die in den erfindungsgemäßen DMC-Katalysatoren enthalten sind, sind Verbindungen der allgemeinen Formel (VIII)

$$M_x[M'_{x'}(CN)_y]_z \qquad \text{(VIII)}$$

worin M wie in Formel (III) bis (VI) und

M' wie in Formel (VII) definiert ist, und

x, x', y und z sind ganzzahlig und so gewählt, dass die Elektronenneutralität der Doppelmetallcyanidverbindung gegeben ist.

Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert.-butylether und 3-Methyl-3-oxetan-methanol.

Optional werden bei der Herstellung der erfindungsgemäßen DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische oberflächen- bzw. grenzflächenaktiven Verbindungen eingesetzt.

Bevorzugt werden bei der Herstellung der erfindungsgemäßen DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz (also mindestens ein molares Verhältnis von Metallsalz zu Metallcyanidsalz von 2,25 zu 1,00) und des Metallcyanidsalzes (z.B. Kaliumhexacyanocobaltat) in Gegenwart des organischen Komplexliganden (z.B. tert.-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Vorzugsweise wird in einem ersten Waschschritt (iii-1) mit einer wässrigen Lösung des ungesättigten Alkohols gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäßen Katalysator zu entfernen. Besonders bevorzugt liegt die Menge des ungesättigten Alkohols in der wässrigen Waschlösung zwischen 40 und 80 Gew.-%, bezogen auf die Gesamtlösung des ersten Waschschritts. In den weiteren Waschschritten (iii-2) wird entweder der erste Waschschritt einmal oder mehrmals, vorzugsweise einmal bis dreimal wiederholt, oder vorzugsweise wird eine nichtwässrige Lösung, wie z.B. eine Mischung oder Lösung aus ungesättigtem Alkohol und weiterer komplexbildender Komponente (bevorzugt im Bereich zwischen 0,5 und 5 Gew.-%, bezogen auf die Gesamtmenge der Waschlösung des Schrittes (iii-2)), als Waschlösung eingesetzt und der Feststoff damit einmal oder mehrmals, vorzugsweise einmal bis dreimal gewaschen.

Der isolierte und gegebenenfalls gewaschene Feststoff wird anschließend, gegebenenfalls nach Pulverisierung, bei Temperaturen von im Allgemeinen 20 - 100°C und bei Drücken von im Allgemeinen 0,1 mbar bis Normaldruck (1013 mbar) getrocknet.

Ein bevorzugtes Verfahren zur Isolierung der erfindungsgemäßen DMC-Katalysatoren aus der Suspension durch Filtration, Filterkuchenwäsche und Trocknung wird in WO-A 01/80994 beschrieben.

Ein weiterer Gegenstand der vorliegenden Erfindung ist ein Polyetherestercarbonatpolyol, welches nach dem erfindungsgemäßen Verfahren erhältlich ist.

Die erfindungsgemäß erhaltenen Polyetherestercarbonatpolyole haben beispielsweise eine Funktionalität von mindestens 1, bevorzugt von 1 bis 8, besonders bevorzugt von 1 bis 6 und ganz besonders bevorzugt von 2 bis 4. Das Molekulargewicht beträgt bevorzugt 400 bis 10000 g/mol und besonders bevorzugt 500 bis 6000 g/mol.

Die nach dem erfindungsgemäßen Verfahren erhältlichen Polyetherestercarbonatpolyole weisen einen geringen Gehalt an Nebenprodukten und eine niedrige Viskosität auf und können problemlos verarbeitet werden, insbesondere durch Umsetzung mit Di- und/oder Polyisocyanaten zu Polyurethanen, insbesondere Polyurethan-Weichschaumstoffen wie beispielsweise Polyurethan-Weichblockschaumstoffen und Polyurethan-Weichformschaumstoffen. Für Polyurethananwendungen werden vorzugsweise Polyetherestercarbonatpolyole eingesetzt, die auf einer H-funktionellen Startersubstanz basieren, welche eine Funktionalität von mindestens 2 besitzt. Des Weiteren können die nach dem erfindungsgemäßen Verfahren erhältlichen Polyetherestercarbonatpolyole in Anwendungen wie Wasch- und Reinigungsmittelformulierungen, Bohrflüssigkeiten, Kraftstoffadditiven, ionischen und nicht-ionischen Tensiden, Schmiermitteln, Prozesschemikalien für die Papier- oder Textilherstellung oder kosmetischen Formulierungen verwendet werden. Dem Fachmann ist bekannt, dass abhängig vom jeweiligen Anwendungsgebiet die zu verwendenden Polyetherestercarbonatpolyole gewisse Stoffeigenschaften wie beispielsweise Molekulargewicht, Viskosität, Funktionalität und/oder Hydroxylzahl erfüllen müssen.

In einer ersten Ausführungsform betrifft die Erfindung ein Verfahren zur Herstellung von Polyetherestercarbonatpolyolen durch katalytische Anlagerung von Alkylenoxid und Kohlendioxid an eine H-funktionelle Startersubstanz in Gegenwart eines Doppelmetallcyanid-Katalysators, enthaltend die Schritte:

($\alpha$) Vorlegen einer Teilmenge H-funktioneller Startersubstanz und/oder eines Suspensionsmittels, das keine H-funktionelle Gruppen aufweist, in einen Reaktor gegebenenfalls gemeinsam mit DMC-Katalysator,
(γ) Zudosierung von Alkylenoxid und gegebenenfalls Kohlendioxid während der Reaktion in den Reaktor,

dadurch gekennzeichnet, dass in Schritt (γ) Lactid in den Reaktor zudosiert wird.

In einer zweiten Ausführungsform betrifft die Erfindung ein Verfahren gemäß der ersten Ausführungsform, dadurch gekennzeichnet, dass Schritt (α) in Abwesenheit von Lactid erfolgt.

In einer dritten Ausführungsform betrifft die Erfindung ein Verfahren gemäß Ausführungsform 1 oder 2, dadurch gekennzeichnet, dass das Lactid in einer Menge von 5 Gew.-% bis 40 Gew.-%, bezogen auf die Gesamtmenge am eingesetzten Alkylenoxid, eingesetzt wird.

In einer vierten Ausführungsform betrifft die Erfindung ein Verfahren gemäß Ausführungsform 1 oder 2, dadurch gekennzeichnet, dass das Lactid in einer Menge von 10 Gew.-% bis 30 Gew.-%, bezogen auf die Gesamtmenge am eingesetzten Alkylenoxid, eingesetzt wird.

In einer fünften Ausführungsform betrifft die Erfindung ein Verfahren gemäß einer der Ausführungsformen 1 bis 4, dadurch gekennzeichnet, dass anschließend an den Schritt (α)
(β) zu dem Gemisch aus Schritt (α) eine Teilmenge an Alkylenoxid bei Temperaturen von 90 bis 150°C zugegeben und danach die Zugabe der Alkylenoxidverbindung und/oder des Lactids unterbrochen wird, wobei der Schritt (β) insbesondere unter einer Inertgasatmosphäre, unter einer Atmosphäre eines Inertgas-Kohlendioxid-Gemisches oder unter einer Kohlendioxid-Atmosphäre durchgeführt wird.

In einer sechsten Ausführungsform betrifft die Erfindung ein Verfahren gemäß einer der Ausführungsformen 1 bis 5, dadurch gekennzeichnet, dass im Schritt (γ) die H-funktionelle Startersubstanz, das Alkylenoxid und das Lactid in Gegenwart von Kohlendioxid kontinuierlich in den Reaktor zudosiert werden.

In einer siebten Ausführungsform betrifft die Erfindung ein Verfahren gemäß einer der Ausführungsformen 1 bis 6, dadurch gekennzeichnet, dass im Schritt (γ) die Dosierung der H-funktionellen Startersubstanzen zeitlich vor der Zugabe des Alkylenoxids und/oder des Lactids beendet wird.

In einer achten Ausführungsform betrifft die Erfindung ein Verfahren gemäß einer der Ausführungsformen 1 bis 7, dadurch gekennzeichnet, dass im Schritt (γ) H-funktionelle Startersubstanz, Alkylenoxid, Lactid und Doppelmetallcyanid-Katalysator kontinuierlich in den Reaktor dosiert und das resultierende Reaktionsgemisch kontinuierlich aus dem Reaktor entfernt wird.

In einer neunten Ausführungsform betrifft die Erfindung ein Verfahren gemäß Ausführungsform 8, dadurch gekennzeichnet, dass der Doppelmetallcyanid-Katalysator in der H-funktionellen Startersubstanz suspendiert kontinuierlich zugegeben wird.

In einer zehnten Ausführungsform betrifft die Erfindung ein Verfahren gemäß Ausführungsform 8 oder 9, dadurch gekennzeichnet, dass in einem dem Schritt (γ) nachgelagerten Schritt (δ) das in Schritt (γ) kontinuierlich entfernte Reaktionsgemisch mit einem Alkylenoxid-Gehalt von 0,05 bis 10 Gew.-% in einen Nachreaktor überführt und darin einer Nachreaktion unterzogen wird, wodurch der Gehalt an freiem Alkylenoxid auf weniger als 0,05 Gew.-% im Reaktionsgemisch reduziert wird.

In einer elften Ausführungsform betrifft die Erfindung ein Verfahren gemäß einer der Ausführungsformen 1 bis 10, dadurch gekennzeichnet, dass als Lactid mindestens eine Verbindung der Formel (II) eingesetzt wird,

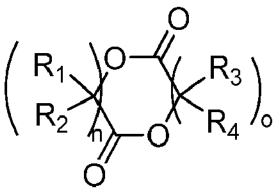

(II)

wobei R1, R2, R3 und R4 unabhängig voneinander für Wasserstoff, einen linearen oder verzweigen gegebenenfalls Heteroatome enthaltenden C1 bis C22 Alkylrest, einen linearen oder verzweigen, ein- oder mehrfach ungesättigten, gegebenenfalls Heteroatome enthaltenden C1 bis C22 Alkenylrest oder einen gegebenenfalls einfach oder mehrfach substituierten, gegebenenfalls Heteroatome enthaltenden C6 bis C18 Arylrest stehen oder Glieder eines gesättigten oder ungesättigten 4 bis 7 gliedrigen gegebenenfalls Heteroatome und/oder Ethergruppen enthaltenen Rings oder polycyclischen Systems sein können,
und n und o unabhängig voneinander eine ganze Zahl größer gleich 1, bevorzugt 1, 2, 3 oder 4 ist, und R1 und R2 in Wiederholungseinheiten (n>1) und R3 und R4 in Wiederholungseinheiten (o > 1) jeweils unterschiedlich sein können.

In einer zwölften Ausführungsform betrifft die Erfindung ein Verfahren gemäß einer der Ausführungsformen 1

bis 10, dadurch gekennzeichnet, dass als Lactid mindestens eine Verbindung ausgewählt aus der Gruppe bestehend aus sind 1,4-Dioxan-2,5-dion, (S,S)-3,6-Dimethyl-1,4-dioxan-2,5-dion, (R,R)-3,6-Dimethyl-1,4-dioxan-2,5-dion, Meso-3,6-Dimethyl-1,4-dioxan-2,5-dion und 3-Methyl-1,4-dioxan-2,5-dion, 3-Hexyl-6-methyl-1,4-dioxane-2,5-dione, 3,6-Di(but-3-en-1-yl)-1,4-dioxane-2,5-dion (jeweils einschließlich optisch aktiver Formen)..

In einer dreizehnten Ausführungsform betrifft die Erfindung ein Verfahren gemäß einer der Ausführungsformen 1 bis 12, dadurch gekennzeichnet, dass die H-funktionelle Startersubstanz ausgewählt ist aus der Gruppe umfassend oder bestehend aus Alkoholen, Aminen, Thiolen, Aminoalkoholen, Thioalkoholen, Hydroxyestern, Polyetherpolyolen, Polyesterpolyolen, Polyesteretherpolyolen, Polycarbonatpolyolen, Polyethercarbonatpolyolen, Polyethyleniminen, Polyetheraminen, Polytetrahydrofuranen, Polyetherthiolen, Polyacrylatpolyolen, Ricinusöl, dem Mono- oder Diglycerid der Ricinolsäure, Monoglyceriden von Fettsäuren, chemisch modifizierten Mono-, Di- und/oder Triglyceriden von Fettsäuren und C1-C24 Alkyl-Fettsäureestern, die im Mittel mindestens 2 OH-Gruppen pro Molekül enthalten.

In einer vierzehnten Ausführungsform betrifft die Erfindung ein Verfahren gemäß einer der Ausführungsformen 1 bis 12, dadurch gekennzeichnet, dass die H-funktionelle Startersubstanz ausgewählt ist aus der Gruppe umfassend oder bestehend aus Ethylenglykol, 1,2-Propandiol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, di- und trifunktionellen Polyetherpolyolen oder Mischungen von diesen, wobei das Polyetherpolyol aus einer di- oder tri-H-funktionellen Startersubstanz und Propylenoxid oder einer di- oder tri-H-funktionellen Startersubstanz, Propylenoxid und Ethylenoxid aufgebaut ist und das Polyetherpolyol insbesondere ein Molekulargewicht $M_n$ im Bereich von 62 bis 4500 g/mol und eine Funktionalität von 2 bis 3 aufweist

## Beispiele

### Einsatzstoffe

PET-I: difunktionelles Poly(oxypropylen)polyol mit einer OH-Zahl von 112 $mg_{KOH}/g$
PO: Propylenoxid
Lactid: 3,6-Dimethyl-1,4-dioxane-2,5-dion
MSA: Maleinsäureanhydrid
DMC-Katalysator wurde gemäß Beispiel 6 in WO 01/80994 A1 hergestellt

### Methoden

Bei der Terpolymerisation von Propylenoxid, Lactid und $CO_2$ resultierte neben dem cyclischen Propylencarbonat das Polyetherestercarbonatpolyol, welches einerseits in Formel (IXa) gezeigte Polycarbonat-Einheiten enthält,

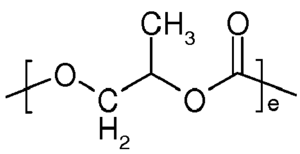

bzw.

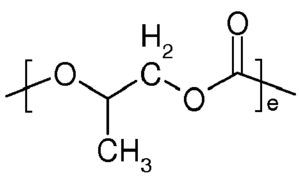

(IXa)

und andererseits in Formel (IXb) gezeigte Polyether-Einheiten enthält.

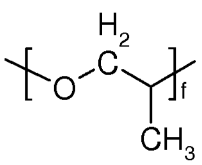

bzw.

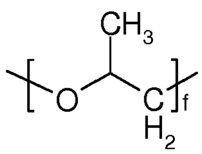

(IXb)

Die Charakterisierung des Reaktionsgemisches erfolgte durch $^1$H-NMR Spektroskopie.

Das Verhältnis der Menge an cyclischem Propylencarbonat zu Polyetherestercarbonatpolyol (Selektivität; Verhältnis g/e) sowie der Anteil der nicht umgesetzten Monomere (Propylenoxid $R_{PO}$, Lactid $R_{Lactid}$ in mol%) wurden mittels $^1$H-NMR Spektroskopie bestimmt. Dazu wurde jeweils eine Probe der nach der Reaktion erhaltenen Reaktionsmischung in deuteriertem Chloroform gelöst und auf einem Spektrometer der Firma Bruker (AV400, 400 MHz) vermessen.

Anschließend wurde die Reaktionsmischung mit Dichlormethan (20 ml) verdünnt und die Lösung durch einen Fallfilmverdampfer geleitet. Die Lösung (0,1 kg in 3 h) lief entlang der inneren Wand eines von außen auf 120°C beheizten Rohres mit 70 mm Durchmesser und 200 mm Länge herab, wobei die Reaktionsmischung durch drei mit einer Geschwindigkeit von 250 rpm rotierende Rollen mit 10 mm Durchmesser jeweils gleichmäßig als dünner Film auf der inneren Wand des Fallfilmverdampfers verteilt wurde. Im Inneren des Rohres wurde über eine Pumpe ein Druck von 3 mbar eingestellt. Die von leicht flüchtigen Bestandteilen (nicht umgesetzte Epoxide, cyclisches Carbonat, Lösungsmittel) gereinigte Reaktionsmischung wurde am unteren Ende des beheizten Rohres in einer Vorlage aufgefangen.

Das molare Verhältnis von Carbonatgruppen zu Ethergruppen im Polyetherestercarbonatpolyol (Verhältnis e/f) sowie der molare Anteil von in das Polymer eingebautem Lactid wurden mittels $^1$H-NMR Spektroskopie bestimmt. Eine Probe der gereinigten Reaktionsmischung wurde dazu jeweils in deuteriertem Chloroform gelöst und auf einem Spektrometer der Firma Bruker (AV400, 400 MHz) vermessen.

Die relevanten Resonanzen im $^1$H-NMR Spektrum (bezogen auf TMS = 0 ppm), die zur Integration verwendet wurden, sind wie folgt:

I1: 1,10 - 1,17 ppm: $CH_3$ der Polyether-Einheiten, Fläche der Resonanz entspricht drei H Atomen,
I2: 1,25 - 1,34 ppm: $CH_3$ der Polycarbonat-Einheiten, Fläche der Resonanz entspricht drei H Atomen,
I3: 4,48-4,58 ppm: CH des cyclischen Carbonats, Fläche der Resonanz entspricht einem H Atomen,
I4: 2,95 - 3,00 ppm: CH Gruppe für freies, nicht abreagiertes Propylenoxid, Fläche der Resonanz entspricht einem H Atom,
15: 1,36-1,54 ppm: $CH_3$ der Polylactid-Einheiten, Fläche der Resonanz entspricht sechs H Atomen,
16: 1,59-1,62 ppm: $CH_3$ der für freies, nicht abreagiertes Lactid, Fläche der Resonanz entspricht sechs H Atomen,
I7: 6,22-6,29 ppm: CH Gruppe der in das Polymer über den Einbau von Maleinsäureanhydrid erhaltenen Doppelbindung, Fläche der Resonanz entspricht zwei H Atomen,
I8: 7,05 ppm: CH Gruppe für freies, nicht abreagiertes Maleinsäureanhydrid, Fläche der Resonanz entspricht zwei H Atomen.

Angegeben sind das molare Verhältnis der Menge an cyclischem Propylencarbonat zu Carbonat-Einheiten im Polyetherestercarbonatpolyol (Selektivität g/e) und das molare Verhältnis von Carbonatgruppen zu Ethergruppen im Polyetherestercarbonatpolyol (e/f) sowie die Anteile des nicht umgesetzten Propylenoxids (in mol%) und Lactids (in mol%).

Unter Berücksichtigung der relativen Intensitäten wurden die Werte wie nachfolgend angegeben für folgende Fälle berechnet:

Polyetherestercarbonatpolyol A: Polyole erhalten durch Terpolymerisation von Propylenoxid, Kohlendioxid und Lactid
Polyetherestercarbonatpolyol B: Polyole erhalten durch Terpolymerization von Propylenoxid, Kohlendioxid und Maleinsäureanhydrid

Molares Verhältnis der Menge an cyclischem Propylencarbonat zu Carbonat-Einheiten im Polyetherestercarbonatpolyol (Selektivität g/e):

$$\text{Selektivität g/e} = \left[I3/\left(\frac{I2}{3}\right)\right] \qquad (X)$$

Molares Verhältnis von Carbonatgruppen zu Ethergruppen im Polyetherestercarbonatpolyol (e/f):

$$\text{e/f} = I2/I1 \qquad (XI)$$

Der Anteil an $CO_2$-Einbau (Gew.-%) in den Polyetherestercarbonatpolyol A:

$$CO_2\text{-Einbau (Gew.-\%)} = \left[\frac{\left(\frac{I2}{3}\right)*44}{\left(\frac{I1}{3}*58\right)+\left(\frac{I2}{3}*102\right)+\left(\frac{I5}{6}*144\right)}\right]*100 \qquad (XII)$$

Der Anteil an Lactid-Einbau (Gew.-%) in den Polyetherestercarbonatpolyol A:

$$\text{Lactid-Einbau (Gew.-\%)} = \left[ \frac{\left(\frac{I5}{3}\right)*144}{\left(\frac{I1}{3}*58\right)+\left(\frac{I2}{3}*102\right)+\left(\frac{I5}{6}*144\right)} \right] * 100 \qquad \text{(XIII)}$$

Der molare Anteil des nicht umgesetzten Propylenoxids ($UR_{PO}$ in mol%) bezogen auf die Summe der bei der Aktivierung und der Copolymerisation eingesetzten Menge an Propylenoxid, berechnet sich nach der Formel:

$$UR_{PO} = \left[ \frac{I4}{\left(\frac{I1}{3}\right)+\left(\frac{I2}{3}\right)+\left(\frac{I3}{3}\right)+(I4)+\left(\frac{I5}{6}\right)+\left(\frac{I6}{6}\right)} \right] * 100 \qquad \text{(XIV)}$$

Der molare Anteil des nicht umgesetzten Lactids ($UR_{Lactid}$ in mol%) bezogen auf die Summe der bei der Aktivierung und der Copolymerisation eingesetzten Menge an Lactid, berechnet sich nach der Formel:

$$UR_{Lactid} = \left[ \frac{\left(\frac{I6}{6}\right)}{\left(\frac{I1}{3}\right)+\left(\frac{I2}{3}\right)+\left(\frac{I3}{3}\right)+(I4)+\left(\frac{I5}{6}\right)+\left(\frac{I6}{6}\right)} \right] * 100 \qquad \text{(XV)}$$

Der Anteil an $CO_2$-Einbau (Gew.-%) in den Polyetherestercarbonatpolyolen B:

$$CO_2\text{-Einbau (Gew.-\%)} = \left[ \frac{\left(\frac{I2}{3}\right)*44}{\left(\frac{I1}{3}*58\right)+\left(\frac{I2}{3}*102\right)+\left(\frac{I7}{6}*98\right)} \right] * 100 \qquad \text{(XVI)}$$

Der Anteil an MSA-Einbau (Gew.-%) in den Polyetherestercarbonatpolyolen B:

$$\text{MSA-Einbau (Gew.-\%)} = \left[ \frac{\left(\frac{I7}{3}\right)*98}{\left(\frac{I1}{3}*58\right)+\left(\frac{I2}{3}*102\right)+\left(\frac{I7}{6}*98\right)} \right] * 100 \qquad \text{(XVII)}$$

Die OH-Zahl (Hydroxylzahl) wurde gemäß DIN 53240-2 (November 2007) bestimmt.

Das Zahlenmittel $M_n$ und das Gewichtsmittel $M_w$ des Molekulargewichts der entstandenen Polyetherestercarbonatpolyol wurde mittels Gelpermeationschromatographie (GPC) bestimmt. Es wurde nach DIN 55672-1 (August 2007): "Gelpermeationschromatographie, Teil 1 - Tetrahydrofuran als Elutionsmittel" vorgegangen (SECurity GPC-System von PSS Polymer Service, Flussrate 1.0 ml/min; Säulen: 2xPSS SDV linear M, 8x300 mm, 5 $\mu$m; RID-Detektor). Dabei wurden Polystyrolproben bekannter Molmasse zur Kalibrierung verwendet. Die Polydispersität wurde als das Verhältnis $M_w/M_n$ berechnet.

**Beispiel 1: Polyetherestercarbonatpolyol mit einer Funktionalität von 2,0 durch Terpolymerisation einer Mischung von Propylenoxid, 20 Gew.-% Lactid und $CO_2$**

Schritt ($\alpha$)

In einem 300 ml Druckreaktor ausgestattet mit einem Gaseintragsrührer wurde eine Mischung aus DMC-Katalysator (18 mg) und PET-I (30 g) vorgelegt und 30 min bei 130°C in einem partiellen Vakuum (50 mbar) unter Durchleiten von Argon durch die Reaktionsmischung gerührt (800 rpm).

Schritt ($\beta$)

Nach Aufpressen von 15 bar $CO_2$, wobei ein leichter Temperaturabfall zu beobachten war, und Wiedererreichen einer Temperatur von 130°C wurden 3,0 g einer Monomermischung (20 Gew.-% Lactid gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 3,0 g der Monomermischung wurde ein zweites und drittes Mal wiederholt.

Schritt ($\gamma$)

Die Temperatur wurde auf 105°C nachgeregelt und während der nachfolgenden Schritte der Druck im Druckreaktor durch Nachdosieren von $CO_2$ mit Hilfe eines Massenflussreglers bei 15 bar gehalten. Es wurden unter Rühren

weitere 51,0 g einer Monomermischung (20 Gew.-% Lactid gelöst in Propylenoxid) über eine HPLC-Pumpe (1 mL/min) zudosiert, wobei die Reaktionsmischung weiterhin gerührt wurde (800 rpm). Nach Ende der Zugabe von Monomermischung (20 Gew.-% Lactid gelöst in Propylenoxid) wurde die Reaktionsmischung noch weitere 30 min bei 105°C gerührt. Durch Abkühlen des Druckreaktors im Eisbad wurde die Reaktion beendet, der Überdruck abgelassen und das resultierende Produkt analysiert. Die Eigenschaften des erhaltenen Polyetherestercarbonatpolyols sind in Tabelle 1 dargestellt.

**Beispiel 2: Polyetherestercarbonatpolyol mit einer Funktionalität von 2,0 durch Terpolymerisation einer Mischung von Propylenoxid, 20 Gew.-% Maleinsäureanhydrid und $CO_2$**

Schritt ($\alpha$)

In einem 300 ml Druckreaktor ausgestattet mit einem Gaseintragsrührer wurde eine Mischung aus DMC-Katalysator (18 mg) und PET-I (30 g) vorgelegt und 30 min bei 130°C in einem partiellen Vakuum (50 mbar) unter Durchleiten von Argon durch die Reaktionsmischung gerührt (800 rpm).

Schritt ($\beta$)

Nach Aufpressen von 15 bar $CO_2$, wobei ein leichter Temperaturabfall zu beobachten war, und Wiedererreichen einer Temperatur von 130°C wurden 3,0 g einer Monomermischung (20 Gew.-% Maleinsäureanhydrid gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 3,0 g der Monomermischung wurde ein zweites und drittes Mal wiederholt.

Schritt ($\gamma$)

Die Temperatur wurde auf 105°C nachgeregelt und während der nachfolgenden Schritte der Druck im Druckreaktor durch Nachdosieren von $CO_2$ mit Hilfe eines Massenflussreglers bei 15 bar gehalten. Es wurden unter Rühren weitere 51,0 g einer Monomermischung (20 Gew.-% Maleinsäureanhydrid gelöst in Propylenoxid) über eine HPLC-Pumpe (1 mL/min) zudosiert, wobei die Reaktionsmischung weiterhin gerührt wurde (800 rpm). Nach Ende der Zugabe von Monomermischung (20 Gew.-% Maleinsäureanhydrid gelöst in Propylenoxid) wurde die Reaktionsmischung noch weitere 30 min bei 105°C gerührt. Durch Abkühlen des Druckreaktors im Eisbad wurde die Reaktion beendet, der Überdruck abgelassen und das resultierende Produkt analysiert. Die Eigenschaften des erhaltenen Polyetherestercarbonatpolyols sind in Tabelle 1 dargestellt.

**Tabelle 1:** Vergleich der Resultate aus den Beispielen 1 und 2

| Beispiel | 1 | 2* |
|---|---|---|
| Selektivität g/e | 0,05 | 0,03 |
| Monomermischung | 20 Gew.-% Lactid in PO | 20 Gew.-% MSA in PO |
| $CO_2$-Einbau [Gew.-%] | 11,2 | 13,1 |
| $M_n$ [g/mol] | 4223 | 4173 |
| PDI | 1,1 | 1,1 |
| OH-Zahl [mg KOH/g] | 36,5 | 34,6 |
| Viskosität [mPa·s] | 3917 | 12325 |
| *Vergleichsbeispiel | | |

Das Polyetherestercarbonatpolyol, welches durch die Zugabe von Lactid hergestellt wurde (Beispiel 1), weist eine geringere Viskosität auf als Polyetherestercarbonatpolyole ohne Zugabe von Lactid (Beispiel 2).

## Patentansprüche

1. Verfahren zur Herstellung von Polyetherestercarbonatpolyolen durch katalytische Anlagerung von Alkylenoxid und Kohlendioxid an eine H-funktionelle Startersubstanz in Gegenwart eines Doppelmetallcyanid-Katalysators, enthaltend die Schritte:

(α) Vorlegen einer Teilmenge H-funktioneller Startersubstanz und/oder eines Suspensionsmittels, das keine H-funktionelle Gruppen aufweist, in einen Reaktor gegebenenfalls gemeinsam mit DMC-Katalysator,
(γ) Zudosierung von Alkylenoxid und gegebenenfalls Kohlendioxid während der Reaktion in den Reaktor,

**dadurch gekennzeichnet, dass** in Schritt (γ) Lactid in den Reaktor zudosiert wird.

2. Verfahren gemäß Anspruch 1, **dadurch gekennzeichnet, dass** Schritt (α) in Abwesenheit von Lactid erfolgt.

3. Verfahren gemäß Anspruch 1 oder 2, **dadurch gekennzeichnet, dass** das Lactid in einer Menge von 5 Gew.-% bis 40 Gew.-%, bezogen auf die Gesamtmenge am eingesetzten Alkylenoxid, eingesetzt wird.

4. Verfahren gemäß Anspruch 1 oder 2, **dadurch gekennzeichnet, dass** das Lactid in einer Menge von 10 Gew.-% bis 30 Gew.-%, bezogen auf die Gesamtmenge am eingesetzten Alkylenoxid, eingesetzt wird.

5. Verfahren gemäß einem der Ansprüche 1 bis 4, **dadurch gekennzeichnet, dass** anschließend an den Schritt (α) (β) zu dem Gemisch aus Schritt (α) eine Teilmenge an Alkylenoxid bei Temperaturen von 90 bis 150°C zugegeben und danach die Zugabe der Alkylenoxidverbindung und/oder des Lactids unterbrochen wird, wobei der Schritt (β) insbesondere unter einer Inertgasatmosphäre, unter einer Atmosphäre eines Inertgas-Kohlendioxid-Gemisches oder unter einer Kohlendioxid-Atmosphäre durchgeführt wird.

6. Verfahren gemäß einem der Ansprüche 1 bis 5, **dadurch gekennzeichnet, dass** im Schritt (γ) die H-funktionelle Startersubstanz, das Alkylenoxid und das Lactid in Gegenwart von Kohlendioxid kontinuierlich in den Reaktor zudosiert werden.

7. Verfahren gemäß einem der Ansprüche 1 bis 6, **dadurch gekennzeichnet, dass** im Schritt (γ) die Dosierung der H-funktionellen Startersubstanzen zeitlich vor der Zugabe des Alkylenoxids und/oder des Lactids beendet wird.

8. Verfahren gemäß einem der Ansprüche 1 bis 7, **dadurch gekennzeichnet, dass** im Schritt (γ) H-funktionelle Startersubstanz, Alkylenoxid, Lactid und Doppelmetallcyanid-Katalysator kontinuierlich in den Reaktor dosiert und das resultierende Reaktionsgemisch kontinuierlich aus dem Reaktor entfernt wird.

9. Verfahren gemäß Anspruch 8, **dadurch gekennzeichnet, dass** der Doppelmetallcyanid-Katalysator in der H-funktionellen Startersubstanz suspendiert kontinuierlich zugegeben wird.

10. Verfahren gemäß Anspruch 8 oder 9, **dadurch gekennzeichnet, dass** in einem dem Schritt (γ) nachgelagerten Schritt (δ) das in Schritt (γ) kontinuierlich entfernte Reaktionsgemisch mit einem Alkylenoxid-Gehalt von 0,05 bis 10 Gew.-% in einen Nachreaktor überführt und darin einer Nachreaktion unterzogen wird, wodurch der Gehalt an freiem Alkylenoxid auf weniger als 0,05 Gew.-% im Reaktionsgemisch reduziert wird.

11. Verfahren gemäß einem der Ansprüche 1 bis 10, **dadurch gekennzeichnet, dass** als Lactid mindestens eine Verbindung der Formel (II) eingesetzt wird,

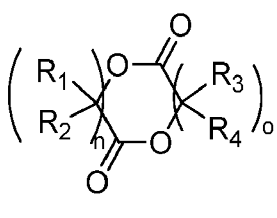

(II)

wobei R1, R2, R3 und R4 unabhängig voneinander für Wasserstoff, einen linearen oder verzweigen gegebenenfalls Heteroatome enthaltenden C1 bis C22 Alkylrest, einen linearen oder verzweigen, ein- oder mehrfach ungesättigten, gegebenenfalls Heteroatome enthaltenden C1 bis C22 Alkenylrest oder einen gegebenenfalls einfach oder mehrfach substituierten, gegebenenfalls Heteroatome enthaltenden C6 bis C18 Arylrest stehen oder Glieder eines gesättigten oder ungesättigten 4 bis 7 gliedrigen gegebenenfalls Heteroatome und/oder Ethergruppen enthaltenen Rings oder polycyclischen Systems sein können,

und n und o unabhängig voneinander eine ganze Zahl größer gleich 1, bevorzugt 1, 2, 3 oder 4 ist, und R1 und R2 in Wiederholungseinheiten (n>1) und R3 und R4 in Wiederholungseinheiten (o > 1) jeweils unterschiedlich sein können.

**12.** Verfahren gemäß einem der Ansprüche 1 bis 10, **dadurch gekennzeichnet, dass** als Lactid mindestens eine Verbindung ausgewählt aus der Gruppe bestehend aus sind 1,4-Dioxan-2,5-dion, (S,S)-3,6-Dimethyl-1,4-dioxan-2,5-dion, (R,R)-3,6-Dimethyl-1,4-dioxan-2,5-dion, Meso-3,6-Dimethyl-1,4-dioxan-2,5-dion und 3-Methyl-1,4-dioxan-2,5-dion, 3-Hexyl-6-methyl-1,4-dioxane-2,5-dione, 3,6-Di(but-3-en-1-yl)-1,4-dioxane-2,5-dion (jeweils einschließlich optisch aktiver Formen)..

**13.** Verfahren gemäß einem der Ansprüche 1 bis 12, **dadurch gekennzeichnet, dass** die H-funktionelle Startersubstanz ausgewählt ist aus der Gruppe umfassend oder bestehend aus Alkoholen, Aminen, Thiolen, Aminoalkoholen, Thioalkoholen, Hydroxyestern, Polyetherpolyolen, Polyesterpolyolen, Polyesteretherpolyolen, Polycarbonatpolyolen, Polyethercarbonatpolyolen, Polyethyleniminen, Polyetheraminen, Polytetrahydrofuranen, Polyetherthiolen, Polyacrylatpolyolen, Ricinusöl, dem Mono- oder Diglycerid der Ricinolsäure, Monoglyceriden von Fettsäuren, chemisch modifizierten Mono-, Di- und/oder Triglyceriden von Fettsäuren und C1-C24 Alkyl-Fettsäureestern, die im Mittel mindestens 2 OH-Gruppen pro Molekül enthalten.

**14.** Verfahren gemäß einem der Ansprüche 1 bis 12, **dadurch gekennzeichnet, dass** die H-funktionelle Startersubstanz ausgewählt ist aus der Gruppe umfassend oder bestehend aus Ethylenglykol, 1,2-Propandiol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, di- und trifunktionellen Polyetherpolyolen oder Mischungen von diesen, wobei das Polyetherpolyol aus einer di- oder tri-H-funktionellen Startersubstanz und Propylenoxid oder einer di- oder tri-H-funktionellen Startersubstanz, Propylenoxid und Ethylenoxid aufgebaut ist und das Polyetherpolyol insbesondere ein Molekulargewicht $M_n$ im Bereich von 62 bis 4500 g/mol und eine Funktionalität von 2 bis 3 aufweist.

**15.** Verfahren gemäß einem der Ansprüche 1 bis 14, **dadurch gekennzeichnet, dass** das Suspensionsmittel, das keine H-funktionelle Gruppen aufweist, ausgewählt ist aus der Gruppe bestehend aus 4-Methyl-2-oxo-1,3-dioxolan, 1,3-Dioxolan-2-on und Mischungen aus 4-Methyl-2-oxo-1,3-dioxolan und 1,3-Dioxolan-2-on.

Europäisches Patentamt
European Patent Office
Office européen des brevets

# EUROPÄISCHER RECHERCHENBERICHT

Nummer der Anmeldung
EP 19 18 4775

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | EP 2 604 641 A1 (BAYER IP GMBH [DE]) 19. Juni 2013 (2013-06-19) * Beispiele 1-3, 7, 8 * ----- | 1-15 | INV. C08G64/34 C08G64/18 |
| | | | RECHERCHIERTE SACHGEBIETE (IPC) |
| | | | C08G |

1 Der vorliegende Recherchenbericht wurde für alle Patentansprüche erstellt

| Recherchenort | Abschlußdatum der Recherche | Prüfer |
|---|---|---|
| Den Haag | 29. August 2019 | Scheunemann, Sven |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 19 18 4775

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-08-2019

| Im Recherchenbericht angeführtes Patentdokument | Datum der Veröffentlichung | Mitglied(er) der Patentfamilie | Datum der Veröffentlichung |
|---|---|---|---|
| EP 2604641 A1 | 19-06-2013 | BR 112014014761 A2 | 13-06-2017 |
| | | CA 2859234 A1 | 20-06-2013 |
| | | CN 103998489 A | 20-08-2014 |
| | | EP 2604641 A1 | 19-06-2013 |
| | | EP 2791205 A2 | 22-10-2014 |
| | | ES 2699266 T3 | 08-02-2019 |
| | | JP 6169600 B2 | 26-07-2017 |
| | | JP 2015500380 A | 05-01-2015 |
| | | KR 20140113644 A | 24-09-2014 |
| | | RU 2014128934 A | 10-02-2016 |
| | | SG 11201402669U A | 26-09-2014 |
| | | US 2014329987 A1 | 06-11-2014 |
| | | WO 2013087582 A2 | 20-06-2013 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2013087582 A2
- EP 2604642 A1
- WO 2014033070 A1
- EP 1359177 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A
- WO 0180994 A1


### In der Beschreibung aufgeführte Nicht-Patentliteratur


- **INOUE et al.** Copolymerization of Carbon Dioxide and Epoxide with Organometallic Compounds. *Die Makromolekulare Chemie,* 1969, vol. 130, 210-220